# EUROPEAN PATENT SPECIFICATION

(11) **EP 1 830 276 B1**
(45) Date of publication and mention of the grant of the patent: **12.08.2009**
(21) Application number: 06004416.1
(22) Date of filing: 03.03.2006
(51) Int. Cl.: G06F 13/10, G06F 9/445, G06F 3/06

(54) **Method for a host end fixedly naming a common serial port device**
Verfahren für Host-End mit fixer Benennung einer Vorrichtung mit gemeinsamem seriellem Anschluss
Procédé pour un terminal hôte nommant fixement un dispositif de port série commun

(43) Date of publication of application: 05.09.2007
(73) Proprietor: Moxa Technologies Co., Ltd., Shing Tien City, Taipei Hsien (TW)
(72) Inventor: Chen, You-Shih, Shing Tien City, Taipei Hsien (TW); Lin, Cheng-Yi, Shing Tien City, Taipei Hsien (TW)
(74) Representative: Glawe, Delfs, Moll

(56) References cited:
- DIGITAL FOCI INC.: "Media Buddy Portable Data Manager User's Guide" 31 December 2005 (2005-12-31), , XP002389631 Retrieved from the Internet: URL:http://www.digitalfoci.com/downloads/p roduct_literature/MEB-300_Manual.pdf> * pages 10,21,23 *
- "Microsoft Extensible Firmware Initiative FAT32 File System Specification; FAT: General Overview of On-Disk Format; Version 1.03" 6 December 2000 (2000-12-06), , XP002389632 Retrieved from the Internet: URL:http://www.microsoft.com/whdc/system/p latform/firmware/fatgen.mspx> * page 11 *

## Description

### BACKGROUND OF THE INVENTION

### 1. Field of the Invention

The present invention relates to a method for a host end fixedly naming a common serial port device, and more particularly to a method provided for users to fixedly name a common serial port device through a driver program in a host end, when the common serial port device is coupled to the host end.

### 2. Description of Related Art

As computer technologies are developed rapidly, the trend of computers tends to have more powerful functions, a faster speed, and a smaller size, and thus the number of COM ports available for connecting peripheral devices becomes less, and the transmission interface is substantially divided into two types, namely a parallel transmission and a serial transmission, wherein the parallel transmission (such as the parallel port, IDE and PCMCIA, etc) has the feature of a fast transmission speed but involves many transmission circuits, and the cost becomes very high. On the other hand, the serial transmission (such as the serial port, USB and IEEE1394, etc) is slow, and thus the parallel transmission specification such an Integrated Drive Electronics interface (IDE) having the features of a fast transmission speed, an easy installation, a mature technology is commonly used, and the IDE is applied extensively for massive storage devices in the occasions of accessing data between a main system and a hard disk drive or accessing data between a main system or an optical disk drive. Further, the common serial bus port includes USB and IEEE1394, and they are the present popular serial transmission specifications having the features of simultaneously accessing several common serial port devices, hot swap, plug and play, and multi-node serial functions. The transmission rate of the common serial port is increased rapidly, such that the common serial port has become a major specification used for the computer peripheral devices and electronic data transmissions between the computer peripheral devices and the electronic products. For example, portable common serial port devices are generally comprised of peripheral devices including a storage device (such as portable disk and an external hard disk, etc), a pointer input device (such as a mouse, a joystick and an external keyboard), an audio/video device (a MP3 (MPEG Layer 3), a digital camera, a digital camcorder, etc.), a communication device (a mobile phone), a personal digital assistant (PDA) and an expansion device (such as a hub, an external floppy disk drive, an external optical disk drive and a card reader, etc). The non-portable common serial port devices are generally comprise of peripheral devices including a printer, a scanner or a keyboard, and almost cover all peripheral devices. Since the number of COM ports of a computer available for connecting peripheral devices becomes less, therefore a hub is needed to connect the increased number of peripheral devices, and the peripheral devices can be connected to a computer by connectors of the same specification. Therefore, the common serial port has become a popular connecting interface, and the peripheral device with a common serial port interface are used extensively and become indispensable to students, professionals, and general publics.

Further, the present audio/video device (such as MP3, PDA, digital camera or digital camcorder, etc) or the communication device (such as mobile phone) usually installs a memory card, and different manufacturers provide memory cards with different models, types, sizes, and specifications. At present, the memory cards include the specifications of Multimedia Card (MMC), Compact Flash Card (CF), Smart Media Card (SMC), Memory Stick (MS), Secure Digital Memory Card (SD), XD, etc. Since the memory cards are introduced to the market, the memory cards become a favorite product as well as an indispensable tool to consumers, and the memory cards have been used generally for the electronic products, and thus the demand for various different card readers corresponding to different memory cards is increased greatly.

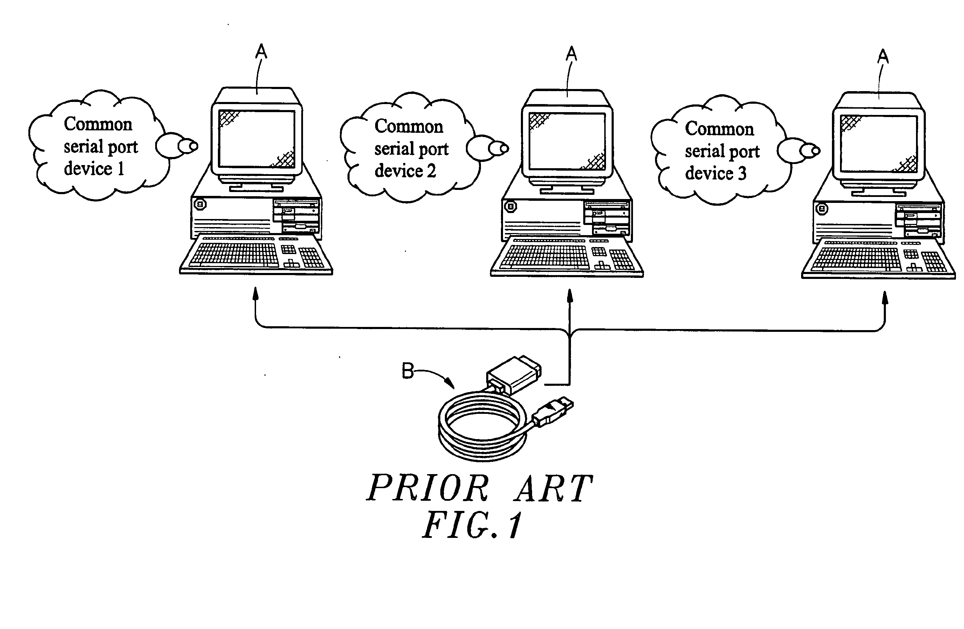

Referring to Fig. 1, a common serial port device **B** is connected to a host end **A,** and the host end **A** drives and names the common serial port device **B,** and the naming of the common serial port device **B** by the host end **A** is determined directly by the operating system of the host end **A,** but the host end **A** follows a general naming process (such as naming by a serial number). After a general user connects a common serial port device **B** to the same or a different host end **A,** the user can see the same common serial port device **B** with a different name on a different common serial port of the same or different host end **A,** and thus the user cannot find the corresponding disk path or the set position of the common serial port device **B** (such as a peripheral device including a mouse, a joystick, an external keyboard, a printer, a scanner or a keyboard, installed at the common serial port of a manager of the host end **A**). Therefore, the user may be confused about the common serial port device **B.**

At present, most of the computer users have more than one computer, and when the user operates a computer, there are many peripheral devices occupying the COM ports and the number of COM ports available for connecting peripheral devices is decreased greatly. Thus, it is necessary to use a hub of the common serial port to connect the increased number of peripheral devices. As science and technology advances, electronic products tend to be light, thin, short and compact, and come with a multifunctional design. To save the using space in an electronic product and miniaturize the electronic product, a card connector for installing different memory cards is provided for the audio/video devices and the communication devices. The use of each common serial port of a hub and each slot of a card reader makes the host end to produce a corresponding disk path, and thus the number of disk paths produced by the host end is increased greatly, and thus the disk paths cannot be found easily. A pointer input device at the manager of the host end also has many unidentified common serial ports.

If an executable program or a hyperlink file having a fixed path is stored in a portable storage device such as a USB flash disk or an external hard disk drive, the host end will produce a disk path with a serial number for each time when the portable storage device is inserted. If the serial numbers of the executable program or hyperlink file of the disk path and the fixed path are different, the operating system will not be able to connect the execute program or hyperlink file for the operation, and the portable storage device including the will be unable to be installed to the host end.

Therefore, finding a way to solve the problem and provide convenience and consistency for the use of a common serial port device, while naming the common serial port connected to the host end according to the general naming rule (naming by the serial numbers) has been deep-rooted and becomes an important issue to computer manufacturers.

### SUMMARY OF THE INVENTION

Therefore, it is a primary objective of the present invention to name a common serial port device from a driver program installed in a host end and store the name, when the common serial port device is coupled to the host end, such that when the common serial port device is coupled to the host end again for the next time, the corresponding fixed names of the host end and the common serial port device can be generated.

### BRIEF DESCRIPTION OF THE DRAWINGS

Fig. 1 is a schematic view of an architecture of a prior art.
Fig. 2 is a schematic view of an architecture of the present invention.
Fig. 3 is a flow chart of the present invention.
Fig. 4 is a schematic view of using several host ends according to the present invention.

### DETAILED DESCRIPTION OF THE PREFERRED EMBODIMENTS

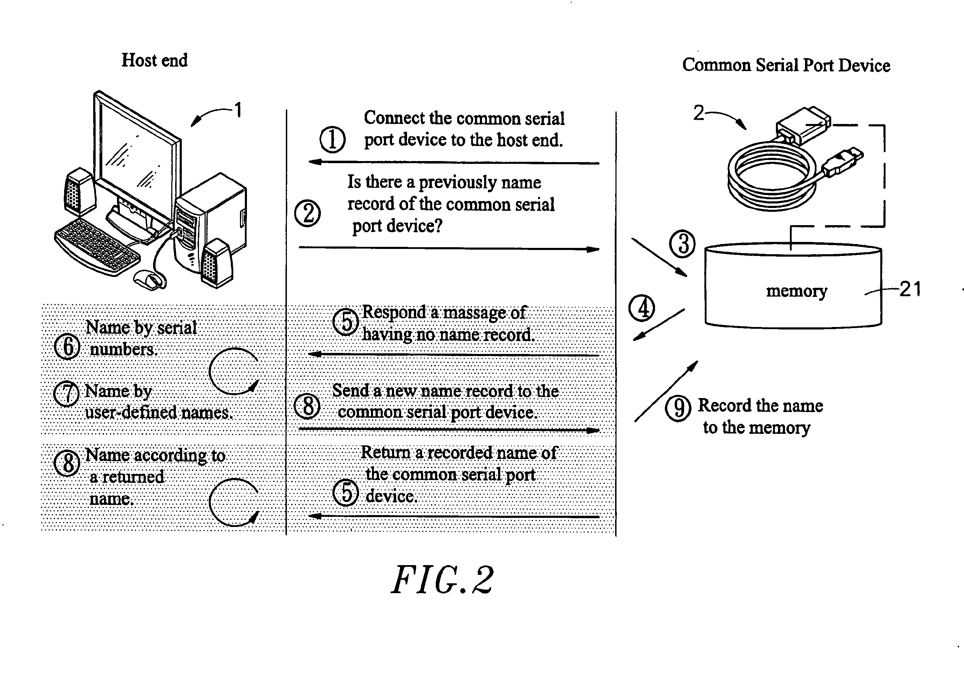

Referring to Fig. 2, after a common serial port device **2** is coupled to a host end **1,** a driver program in the host end **1** issues an inquiry command to check whether or not a previously name record of the common serial port device **2** exists. If there is a name record in the common serial port device **2,** the name record will be responded to the host end **1,** and the host end **1** will complete a naming process according to the name record; and if no name record exists in the common serial port device **2,** then the host end **1** will complete a naming process according to an original naming rule (naming by serial numbers). If a user does not need to have a user-defined name, then a serial number name will be a default name for later naming and will be recorded in a memory **21** of the common serial port device **2.** Further, if the user changes the name of the common serial port device **2,** the changed name will be a default name for later naming and will be recorded into the memory **21** of the common serial port device **2.**

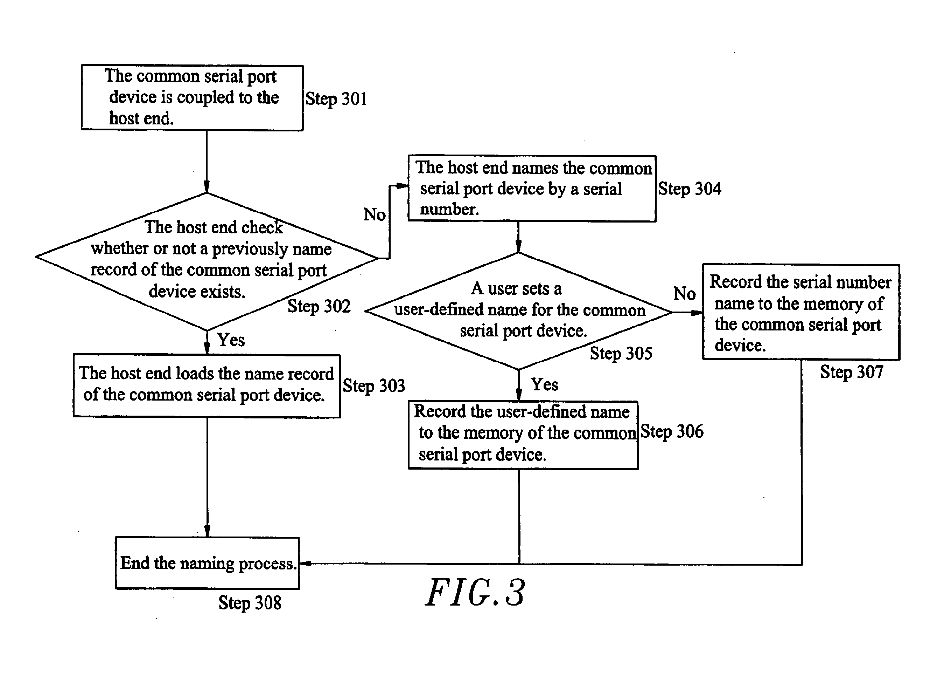

Referring to Figs. 2 and 3, the common serial port device **2** is coupled to the host end **1,** and then the present invention carries out the procedure comprising the following steps.

At step **301,** the common serial port device **2** is coupled to the host end **1.**

At step **302,** the host end **1** checks whether or not a previously name record of the common serial port device **2** exists; if yes, carry out step **303;** if no, carry out step **304.**

At step **303,** the host end **1** loads the name record of the common serial port device **2,** and carry out step **308.**

At step **304,** the host end **1** names the common serial port device **2** by a serial number.

At step **305,** check whether or not a user sets a user-defined name for the common serial port device **2;** if yes, carry out step **306;** if no, carry out step **307.**

At step 306, record the user-defined name to the memory **21** of the common serial port device **2,** and carry out step **308.**

At step **307,** record the serial number name to the memory **21** of the common serial port device **2,** and carry out step **308.**

At step **308,** end the naming process.

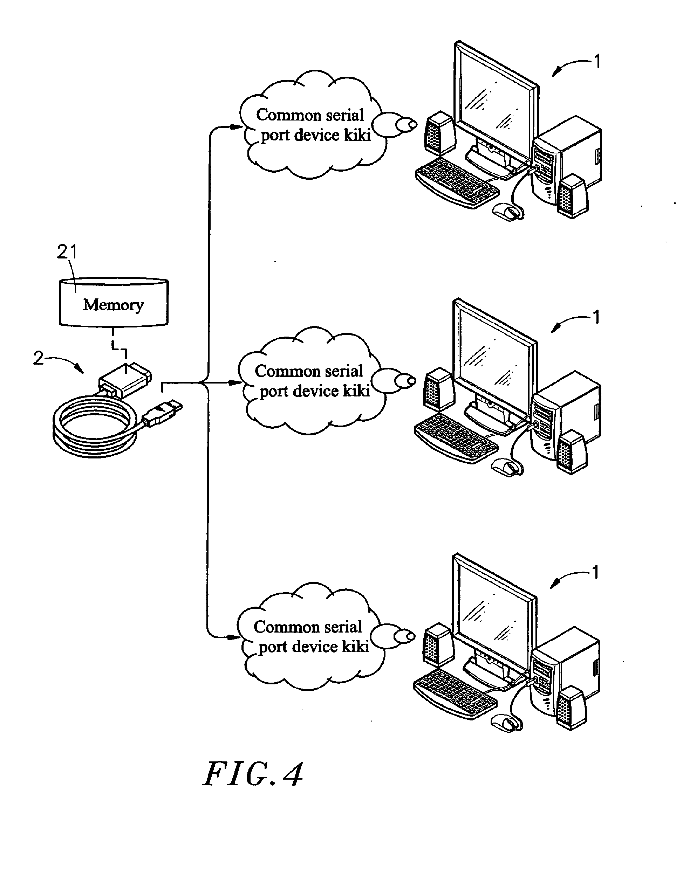

Referring to Fig. 4, when using a plurality of host ends **1** of the present invention, because the names of all host ends **1** are set the same one by the driver programs, thus users can easily connect the common serial port device **2** to the position of the different host ends **1** at home, company, conference, or presentation.

Further, if the common serial port device **2** is a portable storage device such as a portable disk or an external hard disk, a communication device or a personal digital assistant (PDA) and stores an executable program or a hyperlink file having a fixed path, the host end **1** will produce a disk path with a fixed name after the common serial port device **2** is inserted each time, so that the executable program or the hyperlink file in the common serial port device **2** can be connected to the host end **1** directly by a operating system, and the common serial port device **2** will become a storage device fixedly installed to the host end **1,** so as to shorten the time of searching for the common serial port device **2.**

Further, if the common serial port device **2** is a peripheral device, such as a card connector or a hub and stores an executable program or a hyperlink file having a fixed path, when each slot of the card reader and each common serial port of the hub are used, the greatly increased quantity of disk paths of the host end **1** will produce corresponding disk paths with fixed names, and thus the host end **1** can easily find an actual disk path of each common serial port device **2.**

Further, if the common serial port device **2** is a device such as a mouse, a joystick, an external keyboard, a printer, a scanner or a keyboard and stores a fixed path, a manager of the host end **1** will have a common serial port corresponding to the fixed name. The method not only fully complies with the requirements of the current technology, such that the naming of the host end **1** complies with the user's operating habit and the naming process has the least influence to the installation process of the original common serial port device **2** that will insure a success of the installation of the common serial port device **2,** but also improves the convenience of using the common serial port device **2.**

In addition, if the common serial port device **2** is a storage device such as a portable disk or an external hard disk, and is connected to a host end **1** without installing a driver program, the content of the common serial port device **2** already having a driver program cannot be read from a disk path of the host end **1,** and the present invention also can set the disk path of the host end **1** by a serial number to read the content of the common serial port device **2** having the driver program.

The common serial port for connecting the foregoing host end **1** and the common serial port device **2** is a universal serial bus (USB) interface or an IEEE1394 interface.

The foregoing common serial port device **2** is substantially divided into a portable type and a non-portable type. The portable common serial port device is a peripheral device such as a storage device (a portable disk or an external hard disk), a pointer input device (a mouse, a joystick or an external keyboard), an audio/video device (a MP3 (MPEG Layer 3), a digital camera or a digital camcorder), a communication device (a mobile phone), a personal digital assistant (PDA) and an expansion device (a hub, an external floppy disk device, an external optical disk drive or a card reader). The non-portable common serial port device is a peripheral device such as a printer, a scanner or a keyboard.

Further, the memory **21** of the foregoing common serial port device **2** is a non-volatile memory such as a flash memory (flash), an electrically programmable read only memory (EROM), an electrically erasable read only memory (EEROM), an erasable programmable read only memory (EPROM) or an electrically erasable programmable read only memory (EEPROM), or a volatile memory such as a random access memory (RAM), a synchronous dynamic random access memory (SDRAM), a dynamic random access memory (DRAM) or a double data rate synchronous dynamic random access memory (DDR-SDRAM).

Therefore, the method for a host end **1** fixedly naming a common serial port device **2** according to the invention is the most economic, direct, and effective method that has the following advantages.
(1) Most economic, no additional hardware (such as a press key) is needed.
(2) Most direct, the naming of the host end **1** complies with the user's operating habits and meets with the current technologies, and the naming process has the least influence to the installation process of the original common serial port device **2.**
(3) Most effective, the present invention follows the installation process of the host end 1 and the specification of the common serial port device **2,** and thus will not cause a failure of installing the common serial port device **2.** The invention also can improve the convenience of using the common serial port device **2.**

## Claims

1. A method for a host end fixedly naming a common serial port device, comprising the steps of:
(a) coupling a common serial port device to a host end (301);
(b) issuing an inquiry command by a driver program in a host end to check whether or not a previously name record exists in the common serial port device (302);
(c) responding the record to the host end, if the record exists, and completing a naming process according to the record by the host end (303); if the record does not exist, the host end completes a naming process according to a serial number naming method (304);
(d) if a user does not need a user-defined name, then the serial number name will be a default name for later naming, and the name will be recorded into a memory of the common serial port device (307);
(e) if a user wishes to change the name of the common serial port device, then calling a driver program in the host end for a user to carry out a naming and save a name and
writing the name into a memory of the common serial port device from the host end (306), and
(f) the host end associating the common serial port device to its name.

2. The method for a host end fixedly naming a common serial port device as claimed in claim 1, wherein the memory of the common serial port device is a non-volatile memory.

3. The method for a host end fixedly naming a common serial port device as claimed in claim 1, wherein the memory of the common serial port device is a volatile memory.

4. The method for a host end fixedly naming a common serial port device as claimed in claim 1, wherein the common serial port device is a portable storage device.

5. The method for a host end fixedly naming a common serial port device as claimed in claim 1, wherein the common serial port device is a pointer input device.

6. The method for a host end fixedly naming a common serial port device as claimed in claim 1, wherein the common serial port device is an audio/video device.

7. The method for a host end fixedly naming a common serial port device as claimed in claim 1, wherein the common serial port device is an expansion device.

8. The method for a host end fixedly naming a common serial port device as claimed in claim 1, wherein the common serial port device is a personal digital assistant (PDA).

9. The method for a host end fixedly naming a common serial port device as claimed in claim 1, wherein a common serial port for coupling the host end and the common serial port device is a USB transmitting mode.

10. The method for a host end fixedly naming a common serial port device as claimed in claim 1, wherein a common serial port for coupling the host end and the common serial port device is an IEEE 1394 transmitting mode.

## Patentansprüche

1. Verfahren für ein Host-Ende, fest eine gemeinsame, serielle Anschlusseinrichtung zu benennen, das die Schritte aufweist:
(a) eine gemeinsame serielle Anschlusseinrichtung mit einem Host-Ende (301) zu verbinden;
(b) eine Anfrageanweisung durch Treiberprogramm in einem Host-Ende auszugeben, um zu prüfen, ob ein vorheriger Namendatensatz in der gemeinsamen seriellen Anschlusseinrichtung (302) existiert oder nicht;
(c) den Datensatz zum Host-Ende zurückzusenden, wenn der Datensatz existiert, und einen Benennungsprozess entsprechend dem Datensatz durch das Host-Ende (303) zu vervollständigen; wenn der Datensatz nicht existiert, vervollständigt das Host-Ende einen Benennungsprozess gemäß einem Benennungsverfahren (304) der seriellen Nummer;
(d) wenn ein Benutzer keinen benutzerdefinierten Namen benötigt, wird der Name der seriellen Nummer ein Vorgabename für spätere Benennung sein, und der Name wird im Speicher der gemeinsamen seriellen Anschlusseinrichtung aufgezeichnet (307);
(e) wenn ein Benutzer wünscht, den Namen der gemeinsamen seriellen Anschlusseinrichtung zu ändern, wird ein Treiberprogramm im Host-Ende aufgerufen, damit ein Benutzer eine Benennung durchführt und einen Namen speichert, und der Name wird in den Speicher der gemeinsamen seriellen Anschlusseinrichtung am Host-Ende (306) geschrieben; und
(f) das Host-Ende verknüpft diese gemeinsame serielle Anschlusseinrichtung mit ihrem Namen.

2. Verfahren für ein Host-Ende, fest eine gemeinsame serielle Anschlusseinrichtung zu benennen, nach Anspruch 1, bei der der Speicher der gemeinsamen seriellen Anschlusseinrichtung ein nichtflüchtiger Speicher ist.

3. Verfahren für ein Host-Ende, fest eine gemeinsame serielle Anschlusseinrichtung zu benennen, nach Anspruch 1, wobei der Speicher der gemeinsamen seriellen Anschlusseinrichtung ein flüchtiger Speicher ist.

4. Verfahren für ein Host-Ende, fest eine gemeinsame serielle Anschlusseinrichtung zu benennen, nach Anspruch 1, wobei die gemeinsame serielle Anschlusseinrichtung eine tragbare Speichereinrichtung ist.

5. Verfahren für ein Host-Ende, fest eine gemeinsame serielle Anschlusseinrichtung zu benennen, nach Anspruch 1, wobei die gemeinsame serielle Anschlusseinrichtung eine Zeigereingabeeinrichtung ist.

6. Verfahren für ein Host-Ende, fest eine gemeinsame serielle Anschlusseinrichtung zu benennen, nach Anspruch 1, bei denen die gemeinsame serielle Anschlusseinrichtung eine Audio/Videoeinrichtung ist.

7. Verfahren für ein Host-Ende, fest eine gemeinsame serielle Anschlusseinrichtung zu benennen, nach Anspruch 1, bei der die gemeinsame serielle Anschlusseinrichtung eine Erweiterungseinrichtung ist.

8. Verfahren für ein Host-Ende, fest eine gemeinsame serielle Anschlusseinrichtung zu benennen, nach Anspruch 1, wobei die gemeinsame serielle Anschlusseinrichtung ein persönlicher, digitaler Assistent (PDA) ist.

9. Verfahren für ein Host-Ende, fest eine gemeinsame serielle Anschlusseinrichtung zu benennen, nach Anspruch 1, wobei ein gemeinsamer serieller Anschluss zum Verbinden des Host-Endes und der gemeinsamen seriellen Anschlusseinrichtung eine USB-Übertragungsbetriebsart ist.

10. Verfahren für ein Host-Ende, fest eine gemeinsame serielle Anschlusseinrichtung zu benennen, nach Anspruch 1, wobei ein gemeinsamer serieller Anschluss zum Verbinden des Host-Endes und der gemeinsamen seriellen Anschlusseinrichtung eine IEEE 1394 Übertragungsbetriebsart ist.

## Revendications

1. Procédé permettant à une extrémité hôte d'affecter un nom, de manière fixe, à un dispositif de port série commun, comportant les étapes ci-dessous consistant à :
(a) coupler un dispositif de port série commun à une extrémité hôte (301) ;
(b) émettre une commande d'interrogation par le biais d'un programme pilote dans une extrémité hôte pour vérifier la présence ou non d'un enregistrement de nom précédent dans le dispositif de port série commun (302) ;
(c) répondre à l'enregistrement au niveau de l'extrémité hôte, si l'enregistrement existe, et compléter un processus d'affectation de nom selon l'enregistrement par l'extrémité hôte (303), si l'enregistrement n'existe pas, l'extrémité hôte complète un processus d'affectation de nom selon un procédé d'affectation de nom par numéro de série (304) ;
(d) si un utilisateur ne nécessite pas un nom défini par l'utilisateur, alors le nom par numéro de série sera un nom par défaut destiné à une affectation de nom ultérieure, et le nom sera enregistré dans une mémoire du dispositif de port série commun (307) ;
(e) si un utilisateur désire modifier le nom du dispositif de port série commun, appeler alors un programme pilote dans l'extrémité hôte permettant à un utilisateur de mettre en oeuvre une affectation de nom et sauvegarder un nom, et écrire le nom dans la mémoire du dispositif de port série commun à partir de l'extrémité hôte (306) ; et
(f) associer, par le biais de l'extrémité hôte, le dispositif de port série commun à son propre nom.

2. Procédé permettant à une extrémité hôte d'affecter un nom, de manière fixe, à un dispositif de port série commun selon la revendication 1, dans lequel la mémoire du dispositif de port série commun est une mémoire non volatile.

3. Procédé permettant à une extrémité hôte d'affecter un nom, de manière fixe, à un dispositif de port série commun selon la revendication 1, dans lequel la mémoire du dispositif de port série commun est une mémoire volatile.

4. Procédé permettant à une extrémité hôte d'affecter un nom, de manière fixe, à un dispositif de port série commun selon la revendication 1, dans lequel le dispositif de port série commun est un dispositif de stockage portable.

5. Procédé permettant à une extrémité hôte d'affecter un nom, de manière fixe, à un dispositif de port série commun selon la revendication 1, dans lequel le dispositif de port série commun est un dispositif d'entrée de pointeur.

6. Procédé permettant à une extrémité hôte d'affecter un nom, de manière fixe, à un dispositif de port série commun selon la revendication 1, dans lequel le dispositif de port série commun est un dispositif audio/vidéo.

7. Procédé permettant à une extrémité hôte d'affecter un nom, de manière fixe, à un dispositif de port série commun selon la revendication 1, dans lequel le dispositif de port série commun est un dispositif d'extension.

8. Procédé permettant à une extrémité hôte d'affecter un nom, de manière fixe, à un dispositif de port série commun selon la revendication 1, dans lequel le dispositif de port série commun est un assistant numérique personnel (PDA).

9. Procédé permettant à une extrémité hôte d'affecter un nom, de manière fixe, à un dispositif de port série commun selon la revendication 1, dans lequel un port série commun, destiné à coupler l'extrémité hôte et le dispositif de port série commun, est un mode de transmission USB.

10. Procédé permettant à une extrémité hôte d'affecter un nom, de manière fixe, à un dispositif de port série commun selon la revendication 1, dans lequel un port série commun, destiné à coupler l'extrémité hôte et le dispositif de port série commun, est un mode de transmission basé sur la norme IEEE 1394.
